# EUROPÄISCHE PATENTSCHRIFT

(11) **EP 2 870 393 B1**
(45) Veröffentlichungstag und Bekanntmachung des Hinweises auf die Patenterteilung: **24.08.2016**
(21) Anmeldenummer: 13782646.7
(22) Anmeldetag: 05.07.2013
(51) Int. Cl.: F16K 31/122, F16K 21/04, E03C 1/04, F16K 11/07

(54) **LEITUNGSSYSTEM ZUM TRANSPORT VON FLÜSSIGKEITEN**
PIPING SYSTEM FOR TRANSPORTING LIQUIDS
SYSTÈME DE CONDUITES POUR LE TRANSPORT DE LIQUIDES

(30) Priorität: 07.07.2012 DE 102012013594; 07.06.2013 DE 102013009590
(43) Veröffentlichungstag der Anmeldung: 13.05.2015
(73) Patentinhaber: Westarp, Bernt, 40882 Ratingen (DE)
(72) Erfinder: Westarp, Bernt, 40882 Ratingen (DE)
(74) Vertreter: Hauck Patentanwaltspartnerschaft mbB
(86) Internationale Anmeldenummer: PCT/DE2013/000368
(87) Internationale Veröffentlichungsnummer: WO 2014/008880

(56) Entgegenhaltungen:
- EP-A2- 2 146 011
- WO-A1-2006/067580
- WO-A1-2008/095242
- GB-A- 615 974
- US-A- 3 561 489
- US-B1- 6 196 252

## Beschreibung

Die vorliegende Erfindung betrifft ein Leitungssystem zum Transport von Flüssigkeiten mit den Merkmalen des Oberbegriffs von Patentanspruch 1.

Es gibt Fälle, in denen zwei Leitungen zum Transport von Flüssigkeiten abwechselnd gesperrt und geöffnet werden sollen, d.h. wenn die eine Leitung geöffnet wird, soll die andere Leitung gesperrt werden und umgekehrt. Ein solcher Fall ist beispielsweise dann gegeben, wenn eine Kaltwasserleitung und eine Heißwasserleitung abwechselnd gesperrt und geöffnet werden sollen. Ein entsprechendes Beispiel ist in der EP-A 2146011 beschrieben, die eine Duscheinrichtung betrifft, mit der wechselweise Warmwasser oder Kaltwasser abgegeben werden soll. Diese Duscheinrichtung besitzt ein Leitungssystem, das die eingangs beschriebenen Merkmale aufweist.

Bei dem bekannten Leitungssystem weist das Schiebeventil der Ventileinrichtung ein Betätigungselement auf, mit dem das Ventil in einen eine Leitung sperrenden oder öffnenden Zustand bringbar ist. Ein solches Betätigungselement kann beispielsweise ein Elektromagnet sein.

Aus der GB 615 974 ist ein Leitungssystem mit den Merkmalen des Oberbegriffs von Patentanspruch 1 bekannt.

Aus der US 6 196 252 B1 ist ein ähnliches Leitungssystem bekannt, bei dem ebenfalls ein Schiebeventil mit Wechselfunktion Verwendung findet. Auch dieses bekannte Leitungssystem enthält die Merkmale des Oberbegriffs von Patentanspruch 1.

Aus der WO 2008/095242 A1 ist ein Leitungssystem bekannt, das ebenfalls ein Schiebeventil mit Wechselfunktion aufweist, wobei die Position des Ventils durch Wasserdruck gesteuert wird.

Die WO 2006/067580 A1 betrifft eine Vorrichtung zum Durchführen eines Duschvorgangs bei alternierenden Temperaturen, die Umschaltmittel bezüglich der vorgesehenen Warmwasserleitung und Kaltwasserleitung umfasst.

Die EP 2 146 011 A2 beschreibt eine Duscheinrichtung, die ein als Schiebeventil ausgebildetes Ventil besitzt, das zum Öffnen und Schließen einer Mischwasserleitung und einer Heißwasserleitung hin- und herbewegbar ist.

Ein weiteres Schiebeventil mit Wechselfunktion ist aus der US 3 561 489 bekannt.

Der vorliegenden Erfindung liegt die Aufgabe zugrunde, ein Leitungssystem der angegebenen Art zu schaffen, dessen Schiebeventil mit Wechselfunktion eine besonders einfache und energiesparende Funktionsweise besitzt.

Diese Aufgabe wird erfindungsgemäß bei einem Leitungssystem der eingangs beschriebenen Art durch die kennzeichnenden Merkmale von Patentanspruch 1 gelöst.

Bei dem erfindungsgemäß ausgebildeten Leitungssystem wird somit kein besonderes Betätigungselement zur Betätigung des Schiebeventils benötigt, sondern dieses wird vom Flüssigkeitsdruck in den Leitungen betätigt. Hierbei beaufschlagt der Flüssigkeitsdruck in der jeweils gesperrten Leitung einen Steuerraum des Schiebers, wobei bei Erreichen eines Grenzdrucks der Schieber bewegt wird. Dieser wird dann so bewegt, dass er in eine die andere Leitung sperrende Position gelangt. In dieser Position befindet sich die ursprünglich gesperrte Leitung in einem offenen Zustand. In der nunmehr gesperrten Leitung baut sich ein Flüssigkeitsdruck auf, der nach Ablauf einer bestimmten Zeitspanne bis zu einem Grenzdruck im zugehörigen Steuerraum ansteigt, welcher wiederum zu einer Bewegung des Schiebers zurück in die ursprüngliche Position führt. Auf diese Weise wird der Schieber hin- und herbewegt und sperrt und öffnet abwechselnd die beiden Leitungen.

Bei einer speziellen Ausführungsform der Erfindung sind die erste Leitung und die zweite Leitung Zweigleitungen, die sich in Strömungsrichtung in oder nach der Ventileinrichtung zu einer Hauptleitung vereinigen. Bei dieser Ausführungsform wird daher die Hauptleitung abwechselnd mit Flüssigkeit aus der ersten und zweiten Leitung gespeist.

Die Zeitspanne bis zum Erreichen des Grenzdrucks ist vorzugsweise durch Einstellung der Flüssigkeitszufuhr zur Beaufschlagung des jeweiligen Steuerraumes regulierbar. Dabei ist insbesondere für die Regulierung der Flüssigkeitszufuhr ein verstellbares Ventil vorgesehen. Durch Einstellung bzw. Verstellung des zugehörigen Ventils kann somit die Zeitspanne eingestellt werden, über die eine Leitung gesperrt bzw. die andere Leitung geöffnet wird. Wird die Flüssigkeitszufuhr bzw. die Durchflussmenge pro Zeiteinheit auf einen hohen Wert eingestellt, erfolgt ein rasches Erreichen des Grenzdrucks und damit eine relativ kurze Sperrphase bzw. Öffnungsphase der jeweiligen Leitung. Mit anderen Worten, die Ventileinrichtung arbeitet mit einer hohen Frequenz. Wird demgegenüber eine geringe Flüssigkeitszufuhr bzw. geringe Durchflussmenge pro Zeiteinheit eingestellt, wird eine längere Zeitspanne bis zum Erreichen des Grenzdrucks benötigt, so dass die Ventileinrichtung mit einer geringeren Frequenz arbeitet.

Zur Beaufschlagung des Steuerraumes mit dem Druck einer Leitung ist speziell eine von dieser Leitung abzweigende Steuerleitung vorgesehen, die in den Steuerraum mündet. Die Flüssigkeitszufuhr über diese Steuerleitung ist, wie erwähnt, vorzugsweise über ein verstellbares Ventil regulierbar bzw. einstellbar.

Bei einer weiteren Ausführungsform ist in Strömungsrichtung vor der Ventileinrichtung in der ersten und/oder zweiten Leitung ein Absperrventil vorgesehen. Mithilfe eines solchen Absperrventils lassen sich eine Leitung oder beide Leitungen sperren, um die Ventileinrichtung außer Betrieb zu setzen.

Bei dem erfindungsgemäßen Leitungssystem kann die erste Leitung eine Heißwasser/Warmwasserleitung und die zweite Leitung eine Kaltwasserleitung oder umgekehrt sein. Mit einer solchen Konstellation kann daher, wenn beide Leitungen in eine gemeinsame Hauptleitung münden, abwechselnd Heißwasser/Warmwasser und Kaltwasser durch die Hauptleitung geführt werden.

Bei einer speziellen Ausführungsform ist hierbei in der ersten Leitung in Strömungsrichtung vor der Ventileinrichtung ein mit der als Kaltwasserleitung ausgebildeten zweiten Leitung in Verbindung stehender Mischer angeordnet, den die zweite Leitung als Bypassleitung ansonsten umgeht. Bei dieser Ausführungsform wird im Mischer Heißwasser und Kaltwasser zu Warmwasser gemischt, beispielsweise mit einem üblichen Thermostatmischer, und die nachfolgende Ventileinrichtung mit Wechselfunktion bewirkt abwechselnd die Abgabe von Warmwasser und Kaltwasser über die Hauptleitung. Da bei dieser Ausführungsform infolge der Abzweigung einer Kaltwasserleitung zum Mischer der Druck in der Kaltwasserleitung geringer ist als der in der Warmwasserleitung, ist hier vorzugsweise im entsprechenden Steuerraum für den Schieber zusätzlich eine Feder vorgesehen, die für einen entsprechenden Druckausgleich sorgt.

Das hier beschriebene Leitungssystem kommt insbesondere bei einer Ausführungsform zur Anwendung, bei der es als Teil einer Wechseldusche ausgebildet ist, bei der die Warmwasser- und Kaltwasserintervalle durch Einstellung der Flüssigkeitszufuhr zur Beaufschlagung des jeweiligen Steuerraumes regulierbar sind. Eine derartige Wechseldusche ist beispielsweise in der vorstehend erwähnten EP-A 2146011 beschrieben. Einzelheiten einer solchen Wechseldusche müssen daher hier nicht mehr aufgeführt werden.

Bei der erfindungsgemäßen Lösung wird nur ein Steuerraum (erster Steuerraum) vom sich in der jeweils gesperrten Leitung aufbauenden Flüssigkeitsdruck beaufschlagt, welcher nach Ablauf einer bestimmten Zeitspanne bei Erreichen eines Grenzdrucks den Schieber in die die andere Leitung sperrende Position bewegt, während im anderen Steuerraum (zweiter Steuerraum) eine den Schieber in die die eine Leitung sperrende Position bewegende Feder angeordnet ist, und ist im Schieber ein beide Steuerräume miteinander verbindendes Bypassventil angeordnet, das eine Bewegung des Schiebers zum ersten Steuerraum durch den Druck der Feder infolge eines Flüssigkeitsaustausches vom ersten Steuerraum in den zweiten Steuerraum über das Bypassventil ermöglicht.

Dieses Leitungssystem ist dadurch gekennzeichnet, dass der Schieber von nur einem Steuerraum (erstem Steuerraum) mit Flüssigkeitsdruck beaufschlagt wird, während im anderen Steuerraum (zweiten Steuerraum) eine Feder angeordnet ist, die den Schieber zurück in Richtung auf den ersten Steuerraum drückt. Damit die im ersten Steuerraum befindliche Flüssigkeit hierdurch verdrängt werden kann, ist ein Bypassventil im Schieber vorgesehen, das bei einer Bewegung des Schiebers in Richtung auf den ersten Steuerraum öffnet und hierdurch für einen Flüssigkeitsaustausch zwischen den Steuerräumen sorgt. Der Steuerraum, in dem sich die Feder befindet, weist vorzugsweise eine Flüssigkeitsabführleitung zum Druckabbau auf. Diese kann beispielsweise als Düse ausgebildet sein. Das Bypassventil ist daher bei einer Bewegung des Schiebers zum zweiten Steuerraum geschlossen und bei einer Bewegung zum ersten Steuerraum geöffnet.

Vorzugsweise umfasst das Bypassventil eine sich durch den Schieber erstreckende Leitung sowie ein Verschlusselement für die Leitung und eine dieses beaufschlagende Feder. Die Leitung kann beispielsweise in Form eines Rohres ausgebildet sein, das im Schieber angeordnet ist und vom Schieber in den zweiten Steuerraum vorsteht. Am Rohrende befindet sich das Verschlusselement, das mithilfe der Verschlussfeder geschlossen wird.

Zur Beaufschlagung des einen Steuerraumes (ersten Steuerraumes)mit dem Druck der Flüssigkeitsleitung ist zweckmäßigerweise eine von dieser Leitung abzweigende Steuerleitung vorgesehen, die in den ersten Steuerraum führt. Um die Flüssigkeitszufuhr in den ersten Steuerraum zu regulieren, ist vorzugsweise ein entsprechendes Regelventil in der Steuerleitung angeordnet. Über dieses erste Regelventil und die im anderen Steuerraum vorgesehene Feder können daher die Wechselintervalle des Schiebers (Zeitintervalle) eingestellt werden.

Bei einer besonders bevorzugten Ausführungsform der Erfindung passiert die zum ersten Steuerraum führende Steuerleitung das Schiebergehäuse und ist durch Verschiebung des Schiebers öffenbar und schließbar. Bei dieser Ausführungsform wird daher durch eine Bewegung des Schiebers die Flüssigkeitszufuhr zum ersten Steuerraum kurzfristig unterbrochen. Dies ist konstruktiv dadurch verwirklicht, dass der Schieber an seinem Umfang eine ringförmige Vertiefung aufweist, in die die Steuerleitung mündet und von der die Steuerleitung abzweigt. Durch Verschiebung dieser Vertiefung kann der Schieber die entsprechende Steuerleitung sperren.

Das Leitungssystem ist konstruktiv vorzugsweise so gestaltet, dass die erste und zweite Leitung in das Schiebergehäuse münden und dass eine dritte Leitung vom Schiebergehäuse abzweigt, wobei der Schieber abwechselnd die Verbindung der ersten Leitung oder zweiten Leitung zur dritten Leitung öffnet oder sperrt. Hierbei ist die Verbindung zwischen den Leitungen vorzugsweise durch einen Ringraum im Schieber gebildet.

Hierbei ist die erste Leitung vorzugsweise eine Heißwasser/Warmwasserleitung (Mischwasserleitung) und die zweite Leitung vorzugsweise eine Kaltwasserleitung. Das System kann abwechseln Mischwasser oder Kaltwasser über die dritte Leitung abgeben, ohne dass es hierzu einer Betätigung von außen, beispielsweise über Magnetventile etc., bedarf.

Beispielsweise kann in der ersten Leitung in Strömungsrichtung vor der Ventileinrichtung ein mit der als Kaltwasserleitung ausgebildeten zweiten Leitung in Verbindung stehender Mischer angeordnet sein, den die zweite Leitung als Bypassleitung ansonsten umgeht. Der Mischer kann hierbei für die Erzeugung von Warmwasser bzw. Mischwasser sorgen.

Das vorstehend beschriebene Leitungssystem ist vorzugsweise als Teil einer Wechseldusche ausgebildet, bei der die Warmwasser- und Kaltwasserintervalle durch Einstellung der Flüssigkeitszufuhr zur Beaufschlagung des einen Steuerraumes regulierbar sind.

Die Erfindung wird nachfolgend anhand von Ausführungsbeispielen in Verbindung mit der Zeichnung im Einzelnen erläutert. Es zeigen:
- Figur 1: eine erste Ausführungsform eines Leitungssystems in einer ersten Stellung des Schiebers; und
- Figur 2: das Leitungssystem der Figur 1 in einer zweiten Stellung des Schiebers.

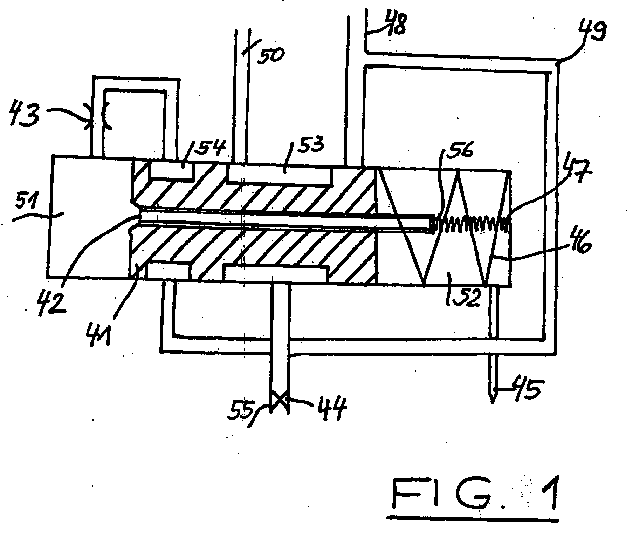

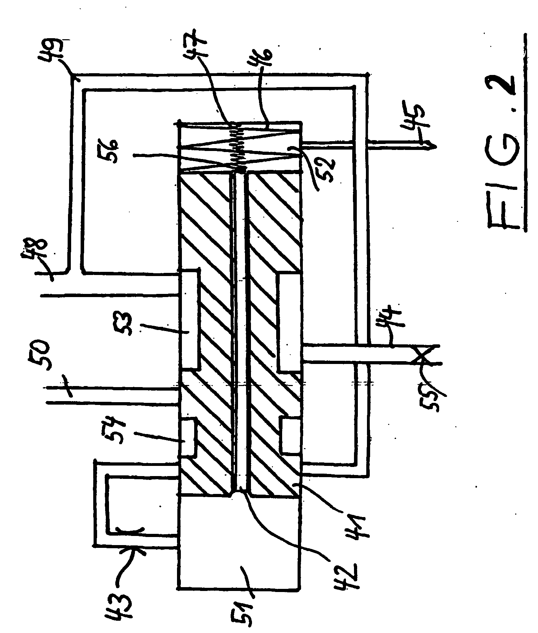

Das in den Figuren 1 und 2 dargestellte Leitungssystem stellt Teil einer Wechseldusche dar, bei der abwechselnd Mischwasser (Warmwasser) und Kaltwasser über einen Duschkopf abgegeben werden. Die entsprechenden Intervalle sind hierbei einstellbar. Für die Durchführung dieses Wechselbetriebes sind hierbei keine Betätigungselemente, wie Magnet.ventile, erforderlich, sondern der Wechselbetrieb erfolgt automatisch bei entsprechender Wasserzufuhr.

Figur 1 zeigt eine Mischwasserleitung (Warmwasserleitung) 50. Das entsprechende Mischwasser wird hierbei durch einen vorgeschalteten Mischer (nicht gezeigt) erzeugt. Ferner zeigt Figur 1 eine Kaltwasserleitung 48. Beide Leitungen münden in den Hohlraum eines Gehäuses, in dem sich ein Schieber (Steuerkolben) 41 befindet, welcher im Gehäuse hin- und herbewegt wird. Auf der in der Figur linken Seite des Schiebers 41 befindet sich ein erster Steuerraum 51, während sich auf der in der Figur rechten Seite des Schiebers 41 ein zweiter Steuerraum 52 befindet. Im zweiten Steuerraum 52 ist eine Feder 46 angeordnet, die den Schieber 41 in der Figur nach links in Richtung auf den ersten Steuerraum 51 drückt.

Die Mischwasserleitung 50 sowie die Kaltwasserleitung 48 münden in das Schiebergehäuse und werden dort zu einer gemeinsamen Leitung 44 vereinigt, die zum nichtgezeigten Duschkopf führt. Der Schieber 41 öffnet oder sperrt hierbei abwechselnd die Verbindung zwischen der Mischwasserleitung 50 oder der Kaltwasserleitung 48 zur gemeinsamen Leitung bzw. Hauptleitung 44.

Von der Kaltwasserleitung 48 zweigt eine Steuerleitung 49 ab und mündet ebenfalls in das Schiebergehäuse und von dort in den ersten Steuerraum 51. In der Steuerleitung 49 befindet sich hierbei ein Regelventil 43, mit dem der Flüssigkeitsdurchsatz durch die Steuerleitung 49 und damit die Zeit einstellbar ist, die eine Kaltwasser- oder Mischwasserabgabeperiode dauert. Der Schieber 41 öffnet dabei die Steuerleitung 49 über einen Ringraum 54 oder verschließt diese entsprechend. Auch die Mischwasserleitung 50 und die Kaltwasserleitung 48 sind über einen Ringraum 53 des Schiebers 41 mit der gemeinsamen Leitung bzw. Hauptleitung 44 verbunden, in der ein entsprechendes Hauptventil 55 angeordnet ist.

Im Schieber 41 befindet sich ein Bypassventil 42 in der Form eines Rohres, das ein Verschlusselement 56 aufweist, welches über eine Feder 47 im geschlossenen Zustand gehalten wird. Bei einer Bewegung des Schiebers 41 in der Figur nach links wird das Verschlusselement 56 durch das aus dem ersten Steuerraum 51 in der Figur nach rechts fließende Wasser geöffnet. Es findet auf diese Weise ein Wasseraustausch zwischen den beiden Steuerräumen 51 und 52 statt. Bewegt sich der Schieber 41 in der Figur nach rechts, hält die Feder 47 das Verschlusselement 56 weitgehend geschlossen. Durch den entsprechenden Wasserdruck wird das Bypassventil schließlich geöffnet, wobei zumindest ein Teil des Wassers über die vorgesehene Entwässerungsdüse 45 aus dem zweiten Steuerraum 52 abgeführt wird.

Das Leitungssystem funktioniert in der folgenden Weise. Figur 4 zeigt das System in einem Zustand, in dem über die Mischwasserleitung 50 Mischwasser in die gemeinsame Leitung 44 abgegeben wird, während die Kaltwasserleitung 48 gesperrt ist. Das Bypassventil 42 ist in dieser Stellung geschlossen. Über die Steuerleitung 49 gelangt Kaltwasser über den offenen Ringraum 54 und das Regelventil 43 in den ersten Steuerraum 51. Durch die entsprechende Druckerhöhung wird der Schieber 41 in der Figur nach rechts bewegt, bis die Mischwasserleitung 50 gesperrt und die Kaltwasserleitung 48 mit dem Ringraum 53 und der gemeinsamen Leitung 44 verbunden wird. Die Feder 46 wird dabei zusammengedrückt. Durch den Überdruck des Wassers aus dem ersten Steuerraum 51 gegen die Kraft der Feder 47 wird das Verschlusselement 56 und somit das Bypassventil 42 geöffnet, wobei Wasser über die Düse 45 abgeführt wird.

Der entsprechende Zustand ist in Figur 2 dargestellt.

Wenn ein Zustand eintritt, in dem die Kraft der Feder 46 größer ist als der entsprechende Gegendruck, wird der Schieber 41 wieder aus der in Figur 2 gezeigten Stellung in die in Figur 1 gezeigte Stellung zurückbewegt. Hierbei wird das im ersten Steuerraum 51 befindliche Wasser über das offene Bypassventil 42 in den zweiten Steuerraum 52 überführt, so dass sich der Schieber 41 nach links bewegen und wieder die Stellung der Figur 1 einnehmen kann.

Durch die Bewegung des Schiebers 41 wird die Steuerleitung 49 kurzfristig gesperrt, so dass die Flüssigkeitszufuhr zum ersten Steuerraum 51 kurzfristig unterbrochen wird. Dies entspricht dem Umschaltpunkt zum Öffnen des Bypassventils 42.

Figur 2 zeigt die Stellung des Schiebers 41, in der Kaltwasser offen und Mischwasser gesperrt ist.

## Patentansprüche

1. Leitungssystem zum Transport von Flüssigkeiten mit einer ersten Leitung (48) und einer zweiten Leitung (50) und einer beide Leitungen abwechselnd öffnenden und sperrenden Ventileinrichtung, die als Schiebeventil mit Wechselfunktion ausgebildet ist, das einen zwischen der ersten Leitung (48) und der zweiten Leitung (50) hin- und herbewegbaren Schieber (41) aufweist, wobei der Schieber (41) beidseitig je einen Steuerraum (51, 52) aufweist, der vom sich in der jeweils gesperrten Leitung (48, 50) aufbauenden Flüssigkeitsdruck beaufschlagt wird, welcher nach Ablauf einer bestimmten Zeitspanne bei Erreichen eines Grenzdrucks den Schieber (41) in die die andere Leitung ( 50, 48) sperrende Position bewegt, **dadurch gekennzeichnet, dass** im zweiten Steuerraum (52) eine den Schieber (41) in die die erste Leitung (48) sperrende Position bewegende Feder (46) angeordnet ist und dass im Schieber (41) ein beide Steuerräume (51, 52) miteinander verbindendes Bypassventil (42) angeordnet ist, das eine Bewegung des Schiebers (41) zum ersten Steuerraum (51) durch den Druck der Feder (46) infolge eines Flüssigkeitsaustausches vom ersten Steuerraum (51) in den zweiten Steuerraum (52) über das Bypassventil (42) ermöglicht.

2. Leitungssystem nach Anspruch 1, **dadurch gekennzeichnet, dass** der zweite Steuerraum (52) eine Flüssigkeitsabführleitung (45) zum Druckabbau aufweist.

3. Leitungssystem nach Anspruch 1 oder 2, **dadurch gekennzeichnet, dass** das Bypassventil (42) bei einer Bewegung des Schiebers (41) zum zweiten Steuerraum (52) geschlossen und bei einer Bewegung zum ersten Steuerraum (51) geöffnet ist.

4. Leitungssystem nach einem der Ansprüche 1 bis 3, **dadurch gekennzeichnet, dass** das Bypassventil (42) eine sich durch den Schieber (41) erstreckende Leitung sowie ein Verschlusselement (56) für die Leitung und eine dieses beaufschlagende Feder (47) umfasst.

5. Leitungssystem nach einem der Ansprüche 1 bis 4, **dadurch gekennzeichnet, dass** zur Beaufschlagung des einen Steuerraumes (erster Steuerraum 51) mit dem Druck einer Leitung eine von dieser Leitung abzweigende Steuerleitung (49) vorgesehen ist.

6. Leitungssystem nach einem der Ansprüche 1 bis 5, **dadurch gekennzeichnet, dass** zur Regulierung der Flüssigkeitszufuhr in den erste Steuerraum (51) ein Regelventil (43) in der Steuerleitung (49) angeordnet ist.

7. Leitungssystem nach Anspruch 5 oder 6, **dadurch gekennzeichnet, dass** die zum ersten Steuerraum (51) führende Steuerleitung (49) das Schiebergehäuse passiert und durch Verschiebung des Schiebers (41) öffenbar und schließbar ist.

8. Leitungssystem nach einem der Ansprüche 1 bis 7, **dadurch gekennzeichnet, dass** die erste und zweite Leitung in das Schiebergehäuse münden und dass eine dritte Leitung (44) vom Schiebergehäuse abzweigt, wobei der Schieber (41) abwechselnd die Verbindung der ersten Leitung oder zweiten Leitung zur dritten Leitung (44) öffnet oder sperrt.

9. Leitungssystem nach Anspruch 8, **dadurch gekennzeichnet, dass** die Verbindung zwischen den Leitungen durch einen Ringraum (53) im Schieber (41) gebildet ist.

10. Leitungssystem nach einem der Ansprüche 1 bis 9, **dadurch gekennzeichnet, dass** die erste Leitung eine Mischwasserleitung (Warmwasserleitung) (50) und die zweite Leitung eine Kaltwasserleitung (48) ist.

11. Leitungssystem nach einem der Ansprüche 1 bis 10, **dadurch gekennzeichnet, dass** in der ersten Leitung in Strömungsrichtung vor dem Schiebergehäuse ein mit der als Kaltwasserleitung (48) ausgebildeten zweiten Leitung in Verbindung stehender Mischer angeordnet ist, den die zweite Leitung als Bypassleitung ansonsten umgeht.

12. Leitungssystem nach einem der Ansprüche 1 bis 11, **dadurch gekennzeichnet, dass** es als Teil einer Wechseldusche ausgebildet ist, bei der die Warmwasser- und Kaltwasserintervalle durch Einstellung der Flüssigkeitszufuhr zur Beaufschlagung des ersten Steuerraumes (41) regulierbar sind.

## Claims

1. A conduit system for transporting liquids comprising a first conduit (48) and a second conduit (50) and valve means alternately opening and blocking both conduits, said valve means being formed as sliding valve with alternating function having a slide (41) moveable to and fro between the first conduit (48) and the second conduit (50) wherein the slide (41) has a respective control space (51, 52) on both sides applied by the liquid pressure raising in the respective blocked conduit (48, 50) which liquid pressure moves the slide (41) into the position blocking the other conduit (50, 48) after expiration of a certain period of time when a limit pressure has been reached, **characterized in that** a spring (46) is disposed in the second control space (52) which moves the slide (41) into the position blocking the first conduit (48) and that a bypass valve (42) is arranged in the slide (41) which connects both control spaces (51,52), the bypass valve (42) enabling a movement of the slide (41) towards the first control space (51) by the pressure of the spring (46) on account of a liquid exchange from the first control space (51) into the second control space (52) through the bypass valve (42).

2. The conduit system according to claim 1, **characterized in that** the second control space (52) has a liquid discharge conduit (45) for the reduction of pressure.

3. The conduit system according to claim 1 or 2, **characterized in that** the bypass valve (42) is closed during a movement of the slide (41) to the second control space (52) and is opened during a movement to the first control space (51).

4. The control system according to one of the claims 1 to 3, **characterized in that** the bypass valve (42) comprises a conduit extending through the slide (41) and a closure member (56) for the conduit as well as a spring (47) pressurizing the same.

5. The conduit system according to one of the claims 1 to 4, **characterized in that**, for pressurizing the one control space (first control space 51) with the pressure of one conduit, a control conduit (49) branching from this conduit is provided.

6. The conduit system according to one of the claims 1 to 5, **characterized in that** a control valve (43) is disposed in the control conduit (49) for the regulation of the liquid supply to the first control space (51).

7. The conduit system according to claim 5 or 6 **characterized in that** the control conduit (49) extending to the first control space (51) passes the slide housing and is openable and closable by the displacement of the slide (41).

8. The conduit system according to one of the claims 1 to 7, **characterized in that** the first and the second conduit open into the slide housing and that a third conduit (44) branches from the slide housing wherein the slide (41) alternately opens or blocks the connection of the first conduit or of the second conduit to the third conduit (44).

9. The control system according to claim 8 **characterized in that** the connection between the conduits is formed by an annular space (53) in the slide (41).

10. The conduit system according to one of the claims 1 to 9, **characterized in that** the first conduit is a mixing water conduit (warm water conduit) (50) and the second conduit is a cold water conduit (48).

11. The conduit system according to one of the claims 1 to 10, **characterized in that** a mixer is disposed in the first conduit in flow direction ahead of the slide housing which mixer is in connection with the second conduit formed as cold water conduit (48) and which mixer is bypassed by the second conduit as bypass conduit otherwise.

12. The conduit system according to one of the claims 1 to 11, **characterized in that** it is formed as part of an alternating shower according to which the warm water and cold water intervals are controllable by the adjustment of the liquid supply for the pressure application of the first control space (41).

## Revendications

1. Système de conduites pour le transport de liquides avec une première conduite (48) et une seconde conduite (50) et un dispositif de soupape ouvrant et bloquant en alternance les deux conduites, lequel est conformé en soupape à coulissement avec un fonctionnement alterné, qui présente un coulisseau (41) qui peut se déplacer entre la première conduite (48) et la seconde conduite (50) et en sens inverse, dans lequel le coulisseau (41) présente des deux côtés respectivement un espace de commande (51, 52) qui est soumis à une pression de liquide s'accumulant dans la conduite respectivement bloquée (48, 50), qui, après écoulement d'une certaine période lorsqu'une pression limite est atteinte, déplace le coulisseau (41) dans la position bloquant l'autre conduite (50, 48), **caractérisé en ce que** l'on aménage dans le second espace de commande (52) un ressort (46) déplaçant le coulisseau (41) dans la position bloquant la première conduite (48) et dans le coulisseau (41) une soupape de dérivation (42) reliant les deux espaces de commande (51, 52) l'un à l'autre, ladite soupape permettant un déplacement du coulisseau (41) vers le premier espace de commande (51) sous la pression du ressort (46) à la suite d'un échange de liquide du premier espace de commande (51) dans le second espace de commande (52) via la soupape de dérivation (42).

2. Système de conduites selon la revendication 1, **caractérisé en ce que** le second espace de commande (52) présente une conduite d'évacuation de liquide (45) pour réduire la pression.

3. Système de conduites selon la revendication 1 ou 2, **caractérisé en ce que** la soupape de dérivation (42) est fermée lors d'un déplacement du coulisseau (41) vers le second espace de commande (52) et est ouverte lors d'un déplacement vers le premier espace de commande (51).

4. Système de conduites selon l'une quelconque des revendications 1 à 3, **caractérisé en ce que** la soupape de dérivation (42) comprend une conduite s'étendant à travers le coulisseau (41) ainsi qu'un élément de fermeture (56) pour la conduite et un ressort (47) sollicitant celui-ci.

5. Système de conduites selon l'une quelconque des revendications 1 à 4, **caractérisé en ce qu'**il est prévu pour alimenter le premier espace de commande (premier espace de commande 51) par la pression d'une conduite une conduite de commande (49) dérivant de cette conduite.

6. Système de conduite selon l'une quelconque des revendications 1 à 5, **caractérisé en ce que** l'on agence dans la conduite de commande (49) une soupape de régulation (43) pour réguler l'acheminement de liquide dans le premier espace de commande (51).

7. Système de conduite selon la revendication 5 ou 6, **caractérisé en ce que** la conduite de commande (49) menant au premier espace de commande (51) traverse le boîtier du coulisseau et peut être ouverte et fermée par déplacement du coulisseau (41).

8. Système de conduite selon l'une quelconque des revendications 1 à 7, **caractérisé en ce que** la première et la seconde conduite débouchent dans le boîtier du coulisseau et une troisième conduite (44) dérive du boîtier du coulisseau, dans lequel le coulisseau (41) ouvre ou bloque en alternance la liaison de la première conduite ou de la seconde conduite avec la troisième conduite (44).

9. Système de conduite selon la revendication 8, **caractérisé en ce que** la liaison entre les conduites est formée par un espace annulaire (53) dans le coulisseau (41).

10. Système de conduite selon l'une quelconque des revendications 1 à 9, **caractérisé en ce que** la première conduite est une conduite d'eau mélangée (conduite d'eau chaude) (50) et la seconde conduite est une conduite d'eau froide (48).

11. Système de conduite selon l'une quelconque des revendications 1 à 10, **caractérisé en ce que** l'on agence dans la première conduite dans le sens d'écoulement en amont du boîtier du coulisseau un mélangeur qui est en communication avec la seconde conduite constituée d'une conduite d'eau froide (48), lequel mélangeur contourne autrement la seconde conduite sous la forme d'une conduite de dérivation.

12. Système de conduite selon l'une quelconque des revendications 1 à 11, **caractérisé en ce qu'**il fait partie d'une douche alternée, dans laquelle les intervalles d'eau chaude et d'eau froide peuvent être régulés par réglage de l'amenée de liquide pour alimenter le premier espace de commande (41).
